# EUROPEAN PATENT SPECIFICATION

(11) **EP 4 358 016 B1**
(45) Date of publication and mention of the grant of the patent: **18.11.2026**
(21) Application number: 22202574.4
(22) Date of filing: 19.10.2022
(51) Int. Cl.: G06T 5/50, G06T 5/70

(54) **METHOD FOR IMAGE PROCESSING**
VERFAHREN ZUR BILDVERARBEITUNG
PROCÉDÉ DE TRAITEMENT D'IMAGE

(43) Date of publication of application: 24.04.2024
(73) Proprietor: Beijing Xiaomi Mobile Software Co., Ltd., Beijing 100085 (CN)
(72) Inventor: Manninen, Tapio, 33720 TAMPERE (FI); Danielyan, Aram, 33720 TAMPERE (FI); Finnilä, Tapio, 33720 TAMPERE (FI); Kyrönlahti, Petteri, 33720 TAMPERE (FI); Granat, Jesper, 33720 TAMPERE (FI); Lampinen, Lasse, 33720 TAMPERE (FI); Adeel Waris, Muhammad, 33720 TAMPERE (FI); Ni, Xingyang, 33720 TAMPERE (FI)
(74) Representative: dompatent

(56) References cited:
- SUN LU ET AL: "Deep Maximum a Posterior Estimator for Video Denoising", ARXIV.ORG, CORNELL UNIVERSITY LIBRARY, 201 OLIN LIBRARY CORNELL UNIVERSITY ITHACA, NY 14853, vol. 129, no. 10, 4 August 2021 (2021-08-04), pages 2827 - 2845, XP037590697, DOI: 10.1007/S11263-021-01510-7
- YUE HUANJING ET AL: "IENet: Internal and External Patch Matching ConvNet for Web Image Guided Denoising", IEEE TRANSACTIONS ON CIRCUITS AND SYSTEMS FOR VIDEO TECHNOLOGY, IEEE, USA, vol. 30, no. 11, 20 July 2019 (2019-07-20), pages 3928 - 3942, XP011817263, ISSN: 1051-8215, [retrieved on 20201028], DOI: 10.1109/TCSVT.2019.2930305

## Description

### Field

The present invention relates to a method for image processing and in particular to noise reduction. Further, the present invention relates to an apparatus implementing such method and a terminal device comprising such an apparatus. Further, the present invention is related to a software.

### Background

Many different approaches exist in order to reduce noise of images. Therein, in particular in modern mobile devices multi-frame noise reduction pipelines are used, wherein multiple frames of a single scene are acquired and superimposed or fused in order to reduce noise. Thereby, noise of pixels of an image can be reduced by combining them with pixels from any other frame. This method works well with non-moving objects in the scene but still may lead to blurred feature edges. With upcoming of artificial intelligence (AI) also algorithms for noise reduction by AI become known. In particular, for the multi frame noise reduction several frames of a same or similar scene are input into the AI algorithm and the AI algorithm is sufficiently trained in order to reduce the noise. However, since the AI algorithm relies on multiple frames, a large amount of data must be processed and the neural networks behind the AI algorithm become large and slow.

SUN LU ET AL: "Deep Maximum a Posterior Estimator for Video Denoising", ARXIV.ORG, CORNELL UNIVERSITY LIBRARY, 201 OLIN LIBRARY CORNELL UNIVERSITY ITHACA, NY 14853, vol. 129, no. 10, 4 August 2021, pages 2827 - 2845, XP37590697 discloses that unlike the maturity of image denoising research. Video denoising has remained a challenging problem. A fundamental issue at the core of the video denoising (VD) problem is how to efficiently remove noise by exploiting temporal redundancy in video frames in a principled manner. Based on the maximum a posterior (MAP) estimation framework and recent advances in deep learning, we present a novel deep MAP-based video denoising method named MAP-VDNet with adaptive temporal fusion and deep image prior. 'The proposed MAP-based VD) algorithm allows computationally efficient untangling of motion estimation (frame alignment) and image restoration (denoising). To address the misalignment issue, the authors also present a robust multi-frame fusion strategy for predicting spatially varying fusion weights by a neural network. To facilitate end-to-end optimization, the authors unfold the proposed iterative MAP-based VD algorithm into a deep convolutional network named MAP-VDNet. Extensive experimental results on three popular video datasets have shown that the proposed MAP-VDNet significantly outperforms current state-of-the-art VD techniques such as ViDeNN and FastDVDnet.

YUE HUANJING ET AL: "IENet: Internal and External Patch Matching ConvNet for Web Image Guided Denoising", IEEE TRANSACTIONS ON CIRCUITS AND SYSTEMS FOR VIDEO TECHNOLOGY, IEEE, USA, vol. 30, no. 11, 20 July 2019, pages 3928 - 3942, XP11817263 discloses that from the non-local self-similarity (NSS) based image denoising to the convolutional network (ConvNet) based image denoising, the denoising performance has been greatly improved. However,it is still not clear how to utilize similar web images to guide image denoising using ConvNet. This paper proposes a novel ConvNet for image denoising to explore both internal (NSS) and external correlations when external similar images are available. Since external similar images may be taken with different viewpoints, focal lengths, and may contain different objects, it is difficult to directly explore external correlations at image level using ConvNet. Therefore, the authors propose an internal and external patch matching ConvNet (IENet), whose inputs are similar patch cubes extracted from the noisy input and its external similar images. The authors design three different network structures, namely early-fusion, middle-fusion and late-fusion of the internal and external cubes to fully combine the strengths of internal and external correlations. Experimental results demonstrate that the proposed method achieves the best denoising results compared with seven state-of-the-art denoising methods. In specific, the proposed method outperforms state-of-the-art web image guided denoising method by more than 1 dB on average, which further demonstrates the superiority of the proposed IENet based filtering over the hand-crafted filtering methods.

### Summary

Thus, it is an object of the present invention to provide a method for image processing and in particular noise reduction with an improved noise reduction performance.

The problem is solved as defined in the independent claims.

The method according to the present invention for image processing and in particular noise reduction comprises the steps of:
acquiring multiple frames preferably by an image sensor;
determining noise information of each frame; wherein the noise information indicates additive white Gaussian noise or signal-dependent Poissonian-Gaussian noise;
combining the multiple frames in a combined image;
determining a residual noise map for the combined image from the noise information of each frame; wherein the residual noise map represents variance of residual noise calculated for each pixel of the combined image; and
reducing noise of the combined image on the basis of the residual noise map to generate a final image estimate;
wherein noise reduction of the combined image is performed by a trained neural network, wherein the neural network receives the combined image and the residual noise map to generate the final image estimate.

Thus, in the first step multiple frames are acquired. Acquiring multiple frames may be performed by an image sensor, which is part of the implementing entity or may be part of any other camera such that the multiple frames are transferred to the entity implementing the method according to the present invention. Therein, at least two frames are acquired from the same or similar scene. In particular, the multiple frames are at least partially overlapping images of a scene at different times. Thus, the multiple frames are consecutively acquired from the same scene and thus may have an overlapping image content but may also have differences caused either by movement of objects in the scene or movement of the camera during acquiring of the multiple frames. In particular each frame comprises noise which can be for example additive white Gaussian noise or signal-dependent Poissonian-Gaussian noise.

For each frame a noise information is determined. Therein, the noise information may include a noise distribution such, for example, as Gaussian, Poisson or the mix of later two or others. Therein, the noise information may be provided in terms of first and second order statistical moments, e.g. using the mean and variance of the noise. In particular, for each pixel of each frame respective noise information is present. Therein, the noise information can be determined from the exposure time, brightness, sensor model or the like. In particular, the noise information for one frame may be the same or similar for all pixels of this frame. Alternatively, noise information for each pixel individually may be determined. Therein, the noise information may describe the noise distribution for the respective pixel as a continuous value or a discrete value.

Subsequently, the multiple frames are combined in a single combined image. Combining of the multiple frames can be done by a commonly known fusion algorithm, which may be part of noise reduction algorithms of the prior art. In particular, the present invention does not depend on the specific choice of the fusion algorithm. The used fusion algorithm receives the multiple frames and generates the single combined image.

In a next step a residual noise map is determined for the combined image, wherein the residual noise map is determined from the noise information of each frame.

Those pixels, which are fused by the fusing algorithm together will be yield to higher signal to noise ratio (SNR). How the SNR changes, is determined by both, how many frames can be fused and how the fusion has been carried out. The resulting SNR of the fused pixel depends on the noise information of the fused frames. In particular, the residual noise map contains spatial noise information of the combined image. Therein, by the residual noise map preferably the residual noise variances are recorded during the process of combining the multiple frames into the combined image as noise information. Thus, the residual noise map may represent variance of the residual noise calculated for each pixel of the combined image.

In the next step noise of the combined image is reduced on the basis of the residual noise map in order to generate the final image estimate as a result of the method, wherein the final image estimate has no noise or a reduced noise compared to the combined image. Hence, the residual noise map is used in order to reduce or remove the noise of the combined image.

As a result, the present invention uses only a single image, i. e. the combined image, for noise reduction after fusion of the multiple frames into the combined image. Therein, the noise information of each frame is utilized also for the noise reduction of the combined image. Therein, the noise information of each fused image pixel in the combined image is generated such that it remains mathematically valid with regard to the fusion applied to the image. This results in pixelwise noise characteristics, which accurately corresponds to the combined image. Due to considering only the combined image for the noise reduction the data to be processed in the step of noise reduction is reduced. At the same time due to considering the noise information of each of the multiple frames for the noise reduction of the combined image by the residual noise map, the denoising performance is increased.

Noise reduction of the combined image is performed by a trained neural network, wherein the neural network receives the combined image only and the residual noise map to generate a final image estimate. Thus, the neural network does not need to consider the large data amount of multiple frames but instead can be applied only to the combined image. Thereby, the requirements and the size of the neural network can be reduced and simplified wherein, as stated above, the denoising performance is still increased.

Preferably, the neural network is trained using pairs consisting of a training image and a training residual noise map. Therein, the training images are generated by applying corresponding residual noise maps to noise free images such that the training images include synthesized noise on the basis of the respective training residual noise map. Residual noise map may be synthetised randomly, such to mimic spatial variation of noise distribution resulting from the fusion process. The training images including the synthesized noise and corresponding noise maps are applied to the neural network to be trained and the result of the neural network is compared to the noise free image for evaluation and training.

Preferably, the residual noise map contains spatially varying noise information of the combined image. Thus, the residual noise map contains noise information dependent on the combining or fusion process of the multiple frames when generating the combined image. Therein, the residual noise map may contain noise information of areas of the combined image. More preferably, the residual noise map contains pixelwise noise information of the combined image.

Preferably, determining the residual noise map for the combined image from the noise information of each frame comprises adapting the noise information for overlapping areas/pixels of the frames. Therein, if a pixel of the combined image is combined/fused from different frames, the noise information in the residual noise map is adapted accordingly. Due to fusion of the pixel from different frames, the variance of noise for the respective pixel of the combined image is reduced which is recorded in the residual noise map for this pixel (in case of a pixelwise record of noise information) or for the respective area of the combined image the pixel belongs to (for noise information recorded for areas of the combined image).

Preferably, before reducing noise of the combined image on the basis of the residual noise map to generate the final image estimate, the residual noise map may be at least partially manipulated based on an external parameter. Therein, manipulation of the residual noise map may be provided by an external parameter and may influence the overall residual noise map or only parts/areas of the residual noise map corresponding to respective parts and areas of the combined image. In particular, the residual noise map is manipulated pixelwise based on the signal-to-noise ratio of the pixel in the combined image. Thereby filtering strength can be adjusted by the manipulated residual noise map.

Preferably, manipulating the residual noise map is applied to one or more areas of interest, wherein the area of interest includes one or more of a face, a foreground object, a background; wherein preferably the areas of interest are indicated by a user as external parameter or detected. Thus, specifically one or more of the areas of interest can be manipulated by manipulating the respective areas of the residual noise map. Hence, denoising of these areas can be enhanced or decreased. Therein, detection of the areas of interest can rely on edge detection, image recognition or image parameters such as colours, brightness, contrasts or the like.

Preferably, combining of the multiple frames to the combined image is implemented in hardware. In particular, algorithms for combining of multiple frames into one combined image can be accelerated when implemented in a hardware, i. e. a processor, FPGA, ASIC, DSP or the like.

Preferably, determining the residual noise map of the combined image from the noise information of each frame is implemented as software. Due to the nature of the residual noise map the calculation can be implemented in software.

Preferably, the method is implemented as part of any ISP and can be implemented in various ways, such as hardware (HW), software (SW), dedicated accelerators such as digital signal processor (DSP), neural processing unit (NPU) or any combination of these.

In another aspect of the present invention an apparatus is provided including a storage and a processor wherein the storage stores instructions, which when executed by the processor perform steps of the method as described above. Therein, the apparatus may comprise one or more processors for the image processing, wherein in particular tasks of the method are performed on different processors. Therein, the processors may be built as FPGA, ASIC, DSP or the like.

In another aspect of the present invention a terminal device is provided such as a smartphone, tablet, or the like including an image sensor to acquire multiple frames and further an apparatus as described before.

In another aspect of the present invention a software storage device is provided storing instructions which when carried out by a processor perform the steps of the method described above.

### Figures

In the following the present invention is described in more detail with reference to the accompanying drawings.

The figures show:
- Figure 1: a flow diagram of the method according to the present invention,
- Figure 2: a schematic representation of the method according to the present invention,
- Figure 3: a comparison of the method according to the present invention with a prior art,
- Figures 4A and 4B: a detailed representation of aspects of the method according to the present invention,
- Figure 5: a schematic representation of the training according to the present invention,
- Figure 6: an apparatus according to the present invention and
- Figure 7: a terminal device according to the present invention.

### Detailed Description

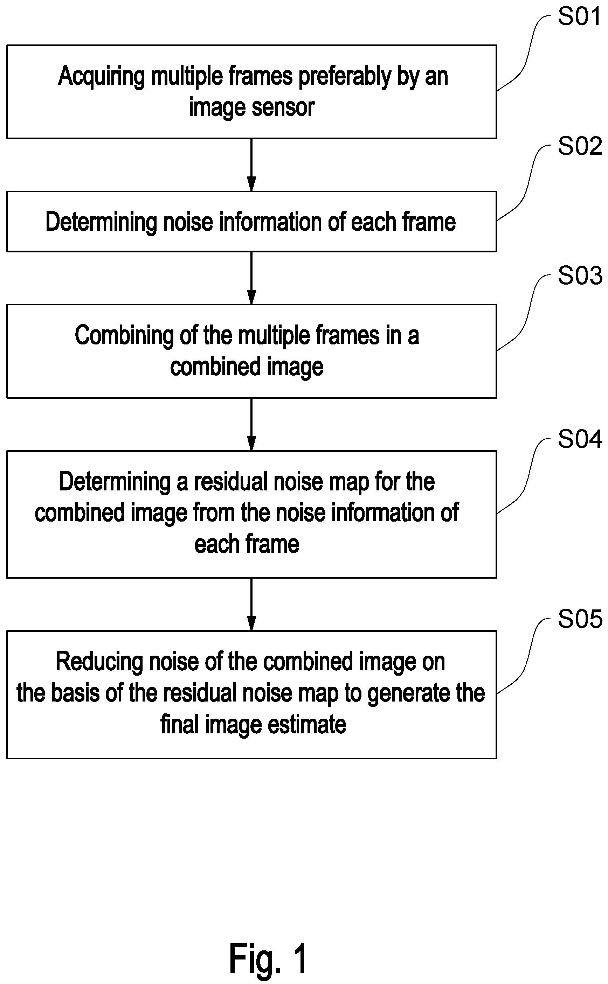

The present invention provides a method for image processing, in particular noise reduction of captured images. The present invention is schematically shown in Figure 1.

In Step S01, multiple frames are acquired preferably by an image sensor.

In Step S02, noise information of each frame is determined.

In Step S03, the multiple frames are combined in a combined image.

In Step S04, a residual noise map is determined for the combined image from the noise information of each frame.

In Step S05, noise of the combined image is reduced on the basis of the residual noise map to generate the final image estimate.

Thus, in Step S01 multiple frames are acquired. Acquiring multiple frames may be performed by an image sensor, which is part of the implementing entity or may be part of any other camera such that the multiple frames are transferred to the entity implementing the method according to the present invention. Therein, at least two frames are acquired from the same or similar scene. In particular, the multiple frames are at least partially overlapping images of a scene at different times. Thus, the multiple frames are consecutively acquired from the same scene and thus may have an overlapping image content but may also have differences caused either by movement of objects in the scene or movement of the camera during acquiring of the multiple frames. In particular each frame comprises noise which can be for example additive white Gaussian noise or signal-dependent Poissonian-Gaussian noise.

In Step S02 for each frame noise information is determined. Therein, the noise information may include one or more of a noise distribution such as a Gaussian or normal distribution, Poisson distribution, or the like. Therein, the noise information may include a noise distribution such, for example, as Gaussian, Poisson or the mix of later two or others. Therein, the noise information may be provided in terms of first and second order statistical moments, e.g. using the mean and variance of the noise. In particular, for each pixel of each frame respective noise information is present. Therein, the noise information can be determined from the exposure time, brightness, sensor model or the like. In particular, for each pixel of each frame respective noise information is present. Therein, the noise information can be determined from the exposure time, brightness, sensor model or the like. In particular, the noise information for one frame may be the same or similar for all pixels of this frame. Alternatively, noise information for each pixel individually may be determined.

In Step S03, the multiple frames are combined in a single combined image. Combining of the multiple frames can be done by a commonly known fusion algorithm, which may be part of noise reduction algorithms of the prior art. In particular, the present invention does not depend on the specific choice of the fusion algorithm. The used fusion algorithm receives the multiple frames and generates the single combined image.

In Step S04 a residual noise map is determined for the combined image, wherein the residual noise map is determined from the noise information of each frame. Those pixels, which are fused by the fusing algorithm together will be yield to higher signal to noise ratio (SNR). Therein, by the residual noise map preferably the residual noise variances are recorded during the process of combining the multiple frames into the combined image as noise information. How the SNR changes, is determined by both, how many frames can be fused and how the fusion has been carried out. The resulting SNR of the fused pixel depends on the noise information of the fused frames. In particular, the residual noise map contains spatial noise information of the combined image.

In Step S05 noise of the combined image is reduced on the basis of the residual noise map in order to generate the final image estimate as a result of the method. Hence, the residual noise map is used in order to reduce the noise of the combined image.

As a result, the present invention uses only a single image, i. e. the combined image, for noise reduction after fusion of the multiple frames into the combined image. Therein, the noise information of each frame is utilized also for the noise reduction of the combined image. Therein, the noise information of each fused image pixel in the combined image is generated such that it remains mathematically valid with regard to the fusion applied to the image. This results in pixelwise noise characteristics, which accurately corresponds to the combined image. Due to considering only the combined image for the noise reduction the data to be processed in the step of noise reduction is reduced. At the same time due to considering the noise information of each of the multiple frames for the noise reduction of the combined image by the residual noise map, the denoising performance is increased.

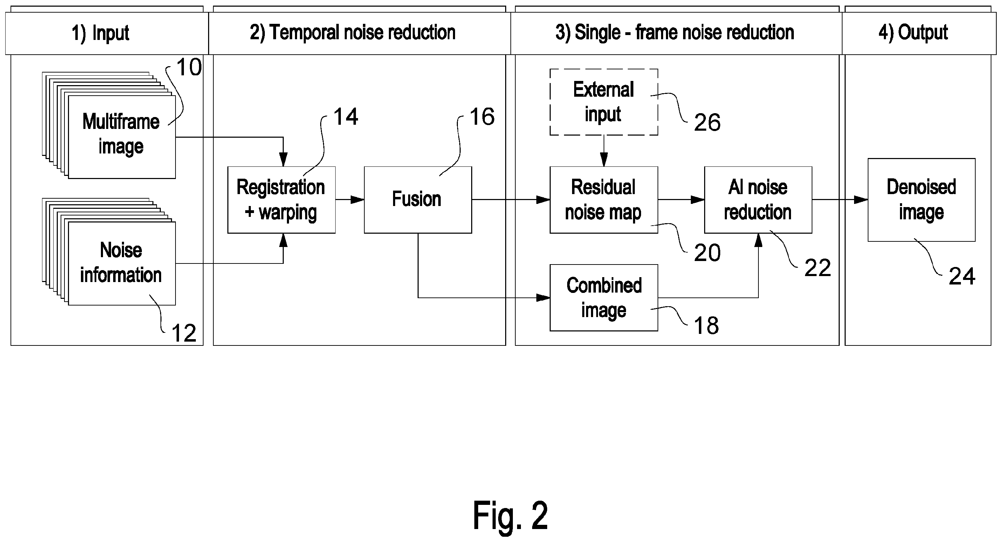

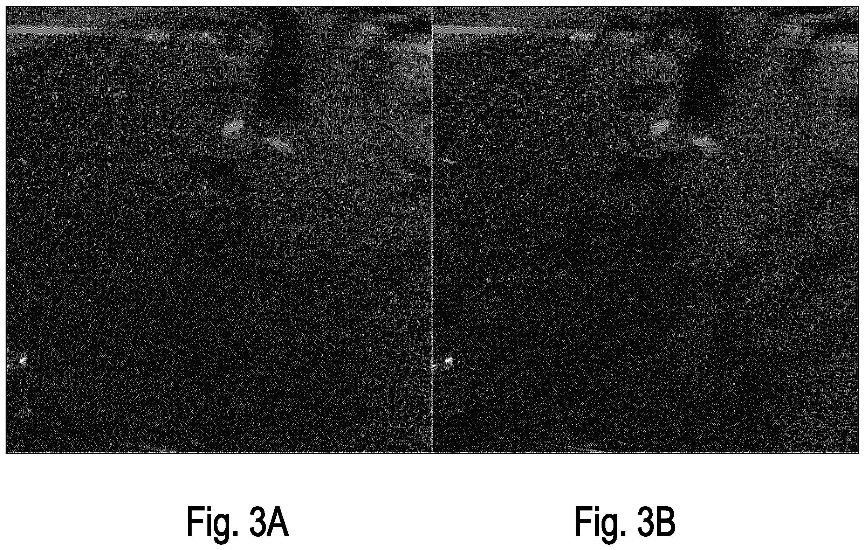

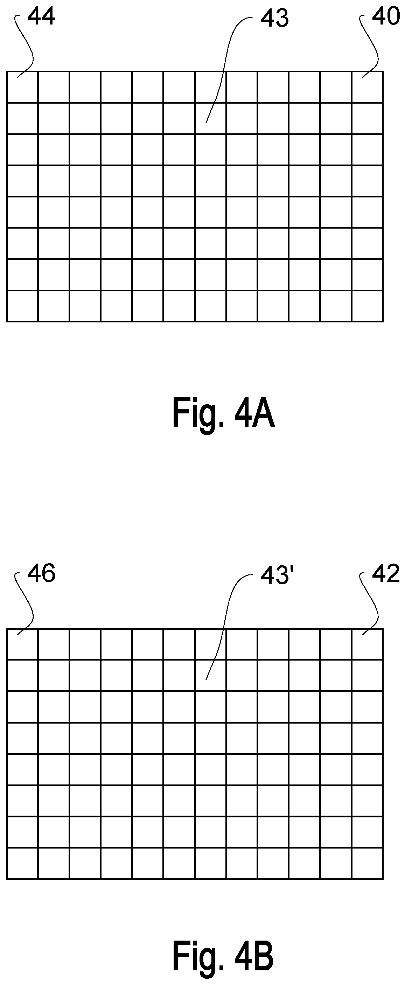

Referring to Figure 2. In a first section "1) *Input"* a multi frame image 10 and respective noise information 12 are provided. Therein, the multiple frames 10 are at least partially overlapping images of a scene at different, subsequent times. Therein, the frames 10 can be captured by the implementing device or can be provided to the device for image processing. Differences of the multiple frames 10 can be caused by either movement of the capturing device or camera, or by moving objects within the scene (as exemplified in Figs. 3A and 3B). Noise reduction of the image on the basis of the multiple frames 10 is performed in section *"2) Temporal noise reduction",* wherein registration and warping 14 is performed in order to overlap the image content of the multiple frames. At the same time noise information is considered. For example, the noise information contains the noise distribution of the individual frames or the standard deviation of this noise distribution in the case of Gaussian or Poisson distribution (white noise) is considered. If for example, a frame has an increased likelihood of noise indicated by the respective noise information in the step of registration and warping as well as fusion 16, this frame will be less weighted in the process of fusion or combining the multiple frames 10. After fusion 16 only a single combined image 18 is generated which is pre-denoised due to the temporal noise reduction by fusion 16. At the same time a residual noise map 20 is generated, therein the residual noise map 20 contains a fused noise information from the individual frames. Examples are shown in Figures 4A and 4B. Figure 4A shows a simplified representation of a combined image 40 with pixel information 44 wherein, the image 40 is composed of the individual pixel information 44. The residual noise map 42 shown in Figure 4B contains pixelwise or at least areawide noise information 46 of the combined image 40. For example if pixel 43, indicated in Figure 4A, in the combined image 40 is created by fusion of at least two frames of the multiple of frames 10, then the respective pixelwise noise information 43' is also generated due to fusion of the respective noise information of the combined frames. In other words, if the exemplified pixel 43 is extracted only from one frame without combination with other frames of the multiple of frames 10, then the resulting pixel information 43' in the generated residual noise map 42 corresponds to the initial pixel noise information of the one frame itself. By fusion of the individual pixels SNR of the fused pixels is reduced which is recorded in the residual noise map.

Referring back to Figure 2. In section *"3) Single frame noise reduction"* AI noise reduction 22 receives the combined image 18 and the residual noise map 20 and on the basis of the combined image 18 and the residual noise map 20 generates a denoised image 24 or a final image estimate. The AI noise reduction 22 may be a neural network such as a convolutional neuronal network which has been trained in advance. The AI noise reduction 22 receives only a single image, i. e. the combined image 18, instead of the multiple frames 10. Thus, the present invention combines the denoising effect of the multi-frame image fusion for the temporal noise reduction and the single frame noise reduction implemented in the AI noise reduction 22, providing an increased noise reduction performance compared to the prior art and, at the same time, reduces the computational requirements compared to the multi-frame AI noise reduction. The result is shown in Figures 3A and 3B, wherein Figure 3A shows the result by a denoising technique of the prior art, wherein Figure 3B shows the result of the present invention. As can be seen in the figures, details of the bicycle's shadow are sharp and clearly visible and not blurred as denoising artefact.

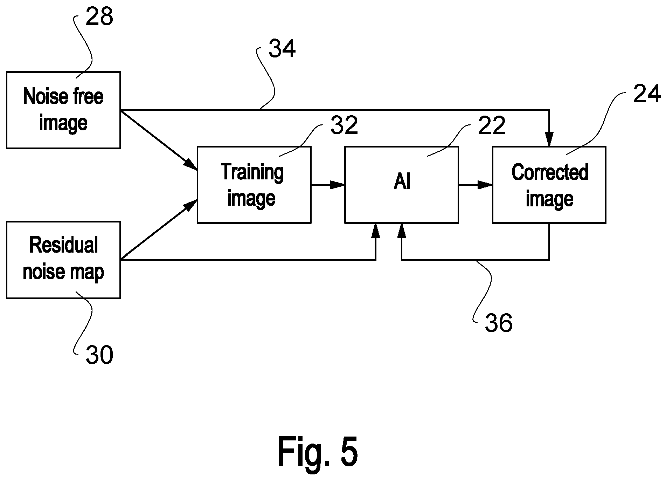

Referring to Figure 5 showing an exemplified way of training the AI noise reduction 22. At first, noise free images 28 are provided together with residual noise maps 30. From the noise free image 28 and one of the residual noise maps 30, a training image 32 is generated which contains synthesized noise on the basis of the respective residual noise map. This synthesized training image 32 is provided to the AI noise reduction 22 together with the residual noise map 30 used for synthesizing the noise in the training image 32. The AI noise reduction 22 is then applied in order to create a final image estimate or denoised image 24. The final image estimate 24 is compared to the noise free image 28 as indicated by arrow 34. The result of the comparison is used as indicated by arrow 36 as feedback to the AI noise reduction 22 for adapting the neural network of the AI. Upon sufficiency of training with a plurality of noise free images 28 for each residual noise map 30 and preferably a plurality of different residual noise maps 30, the neural network of the AI noise reduction 22 can be used.

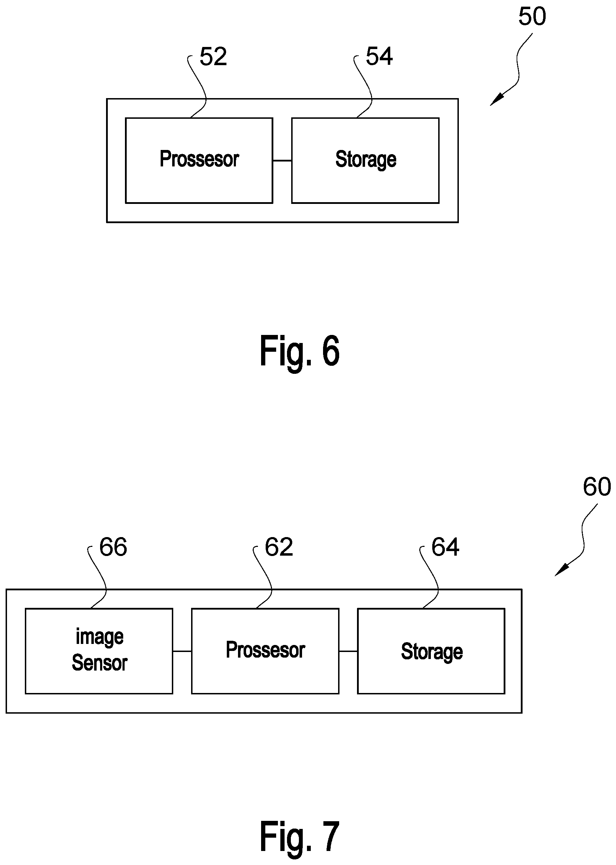

Referring to Figure 6 showing an apparatus according to the present invention. The apparatus 50 comprises a processor 52 connected to a storage 54 wherein the storage 54 contains instructions which when carried out by the processor 52 perform the steps of the method described before. Therein, the processor can be built as central processing unit, micro-controller, ACIS, digital signal processor (DSP), FPGA or the like. In particular, the apparatus 50 may contain more than one processor, wherein individual tasks of the method are performed by different processors. For example the combination of multiple frames into a combined image may be performed by an individual processor and thus implemented in hardware, wherein the generation of the residual noise map 20 of the combined image 18 may be performed by an software algorithm stored in the storage 54.

Referring to Figure 7 showing a terminal device 60 comprising a processor 62 connected to a storage 64. In addition, the terminal device 60 comprises an image sensor 66 in order to acquire multiple frames. Further, the storage 64 contains instructions which when carried out by the processor 62 perform the steps of the method described before. Therein, the processor 62 can be built as central processing unit, micro-controller, ACIS, digital signal processor (DSP), FPGA or the like. In particular, the terminal device 60 may contain more than one processor, wherein individual tasks of the method are performed by different processors. For example the combination of multiple frames into a combined image may be performed by an individual processor and thus implemented in hardware, wherein the generation of the residual noise map 20 of the combined image 18 may be performed by an software algorithm stored in the storage 54.

## Claims

1. Computer-implemented method for image processing, comprising:
acquiring (S01) multiple frames preferably by an image sensor (66);
determining (S02) noise information of each frame; wherein the noise information indicates additive white Gaussian noise or signal-dependent Poissonian-Gaussian noise;
combining (S03) the multiple frames into a combined image;
determining (S04) a residual noise map for the combined image from the noise information of each frame; wherein the residual noise map represents variance of residual noise calculated for each pixel of the combined image; and
reducing (S05) noise of the combined image on the basis of the residual noise map to generate a final image estimate;
wherein noise reduction of the combined image is performed by a trained neural network, wherein the neural network receives the combined image and the residual noise map to generate the final image estimate.

2. Method according to claim 1, wherein the neural network is trained by training images and one or more of training residual noise maps, wherein the training images include synthesized noise on the basis of the training residual noise map.

3. Method according to any of claims 1 to 2, wherein the residual noise map contains spatial varying noise information of the combined image.

4. Method according to any of claims 1 to 3, wherein determining the residual noise map for the combined image from the noise information of each frame comprises adapting the noise information for overlapping areas/pixels of the frames.

5. Method according to any of claims 1 to 4, wherein the residual noise map contains pixelwise noise information.

6. Method according to any of claims 1 to 5, wherein the noise information includes a noise distribution preferably a Gaussian distribution, a Poisson distribution or a mixture thereof, wherein in particular the noise information is a first order statistical moment and a second order statistical moment.

7. Method according to any of claims 1 to 6, wherein before reducing noise of the combined image on the basis of the residual noise map to generate the final image estimate, at least partially manipulating of the residual noise map based on an external parameter, wherein preferably the residual noise map is manipulated pixelwise based on the signal-to-noise ratio of the pixel in the combined image.

8. Method according to claim 7, wherein manipulating the residual noise map is applied to one or more areas of interest, wherein the area of interest includes one or more of a face, a foreground object, a background; wherein preferably the areas of interest are indicated by a user or detected.

9. Method according to any of claims 1 to 8, wherein the multiple frames are at least partially overlapping images of a scene at different times.

10. Method according to any of claims 1 to 8, wherein the combining of the multiple frames in a combined image is implemented in a hardware and/or wherein the determining the residual noise map for the combined image from the noise information of each frame is implemented as software.

11. Apparatus including a storage (54, 64) and a processor (52, 62), wherein the storage stores instruction which when executed by the processor perform the steps of the method according to any of claims 1 to 10.

12. Terminal device, including an image sensor to acquire multiple frames and an apparatus according to claim 11.

13. Software storage device storing instructions which when carried out by a processor (52, 62) perform the steps of the method according to any of claims 1 to 10,

## Patentansprüche

1. Computerimplementiertes Verfahren zur Bildverarbeitung, umfassend:
Erfassen (S01) mehrerer Einzelbilder, vorzugsweise mittels eines Bildsensors (66);
Ermitteln (S02) von Rauschinformationen jedes Einzelbildes; wobei die Rauschinformationen additives weißes Gaußsches Rauschen oder signalabhängiges Poisson-Gaußsches Rauschen angeben;
Kombinieren (S03) der mehreren Einzelbilder zu einem kombinierten Bild;
Ermitteln (S04) einer Restrauschkarte für das kombinierte Bild anhand der Rauschinformationen jedes Einzelbildes; wobei die Restrauschkarte die Varianz des für jedes Pixel des kombinierten Bildes berechneten Restrauschens darstellt; und
Reduzieren (S05) des Rauschens des kombinierten Bildes auf der Grundlage der Restrauschkarte, um eine endgültige Bildschätzung zu erzeugen;
wobei die Rauschreduzierung des kombinierten Bildes durch ein trainiertes neuronales Netzwerk erfolgt, wobei das neuronale Netzwerk das kombinierte Bild und die Restrauschkarte empfängt, um die endgültige Bildschätzung zu erzeugen.

2. Verfahren nach Anspruch 1, wobei das neuronale Netzwerk anhand von Trainingsbildern und einer oder mehreren Trainingsrestrauschkarten trainiert wird, wobei die Trainingsbilder synthetisiertes Rauschen auf der Grundlage der Trainingsrestrauschkarte enthalten.

3. Verfahren nach einem der Ansprüche 1 bis 2, wobei die Restrauschkarte räumlich variierende Rauschinformationen des kombinierten Bildes enthält.

4. Verfahren nach einem der Ansprüche 1 bis 3, wobei das Ermitteln der Restrauschkarte für das kombinierte Bild anhand der Rauschinformationen jedes Einzelbildes das Anpassen der Rauschinformationen für überlappende Bereiche/Pixel der Einzelbilder umfasst.

5. Verfahren nach einem der Ansprüche 1 bis 4, wobei die Restrauschkarte pixelweise Rauschinformationen enthält.

6. Verfahren nach einem der Ansprüche 1 bis 5, wobei die Rauschinformationen eine Rauschverteilung, vorzugsweise eine Gaußsche Verteilung, eine Poisson-Verteilung oder eine Mischung daraus, enthalten, wobei die Rauschinformationen insbesondere ein statistisches Moment erster Ordnung und ein statistisches Moment zweiter Ordnung sind.

7. Verfahren nach einem der Ansprüche 1 bis 6, wobei vor der Rauschreduzierung des kombinierten Bildes auf der Grundlage der Restrauschkarte zur Erzeugung der endgültigen Bildschätzung die Restrauschkarte zumindest teilweise auf der Grundlage eines externen Parameters manipuliert wird, wobei die Restrauschkarte vorzugsweise pixelweise auf der Grundlage des Signal-Rausch-Verhältnisses des Pixels im kombinierten Bild manipuliert wird.

8. Verfahren nach Anspruch 7, wobei das Manipulieren der Restrauschkarte auf einen oder mehrere Interessensbereiche angewendet wird, wobei der Interessensbereich eines oder mehrere aus einem Gesicht, einem Vordergrundobjekt und einem Hintergrund enthält; wobei die Interessensbereiche vorzugsweise von einem Benutzer angegeben oder erkannt werden.

9. Verfahren nach einem der Ansprüche 1 bis 8, wobei die mehreren Einzelbilder zumindest teilweise überlappende Bilder einer Szene zu unterschiedlichen Zeitpunkten sind.

10. Verfahren nach einem der Ansprüche 1 bis 8, wobei das Kombinieren der mehreren Einzelbilder zu einem kombinierten Bild in einer Hardware implementiert wird und/oder wobei das Ermitteln der Restrauschkarte für das kombinierte Bild aus den Rauschinformationen jedes Einzelbildes als Software implementiert wird.

11. Vorrichtung, die einen Speicher (54, 64) und einen Prozessor (52, 62) aufweist, wobei der Speicher Anweisungen speichert, die bei Ausführung durch den Prozessor die Schritte des Verfahrens gemäß einem der Ansprüche 1 bis 10 durchführen.

12. Endgerät, das einen Bildsensor zur Erfassung mehrerer Einzelbilder und eine Vorrichtung nach Anspruch 11 aufweist.

13. Softwarespeichervorrichtung, die Anweisungen speichert, die, wenn sie von einem Prozessor (52, 62) ausgeführt werden, die Schritte des Verfahrens nach einem der Ansprüche 1 bis 10 durchführen.

## Revendications

1. Procédé mis en œuvre par ordinateur pour le traitement d'image, comprenant:
l'acquisition (S01) de multiples trames de préférence par un capteur d'image (66);
la détermination (S02) d'informations de bruit de chaque trame; dans lequel les informations de bruit indiquent un bruit gaussien blanc additif ou un bruit gaussien-poissonnien dépendant du signal;
la combinaison (S03) des multiples trames en une image combinée;
la détermination (S04) d'une carte de bruit résiduel pour l'image combinée à partir des informations de bruit de chaque trame; dans lequel la carte de bruit résiduel représente la variance du bruit résiduel calculée pour chaque pixel de l'image combinée; et
la réduction (S05) du bruit de l'image combinée sur la base de la carte de bruit résiduel pour générer une estimation d'image finale;
dans lequel la réduction du bruit de l'image combinée est effectuée par un réseau de neurones entraîné, dans lequel le réseau de neurones reçoit l'image combinée et la carte de bruit résiduel pour générer l'estimation d'image finale.

2. Procédé selon la revendication 1, dans lequel le réseau de neurones est entraîné par des images d'entraînement et une ou plusieurs cartes de bruit résiduel d'entraînement, dans lequel les images d'entraînement incluent un bruit synthétisé sur la base de la carte de bruit résiduel d'entraînement.

3. Procédé selon l'une quelconque des revendications 1 à 2, dans lequel la carte de bruit résiduel contient des informations de bruit variant spatialement de l'image combinée.

4. Procédé selon l'une quelconque des revendications 1 à 3, dans lequel la détermination de la carte de bruit résiduel pour l'image combinée à partir des informations de bruit de chaque trame comprend l'adaptation des informations de bruit pour des zones/pixels chevauchants des trames.

5. Procédé selon l'une quelconque des revendications 1 à 4, dans lequel la carte de bruit résiduel contient des informations de bruit au niveau des pixels.

6. Procédé selon l'une quelconque des revendications 1 à 5, dans lequel les informations de bruit incluent une distribution de bruit, de préférence une distribution gaussienne, une distribution de Poisson ou un mélange de celles-ci, dans lequel en particulier les informations de bruit sont un moment statistique du premier ordre et un moment statistique du second ordre.

7. Procédé selon l'une quelconque des revendications 1 à 6, dans lequel, avant la réduction du bruit de l'image combinée sur la base de la carte de bruit résiduel pour générer l'estimation d'image finale, une manipulation au moins partielle de la carte de bruit résiduel sur la base d'un paramètre externe, dans lequel de préférence la carte de bruit résiduel est manipulée au niveau des pixels sur la base du rapport signal sur bruit du pixel dans l'image combinée.

8. Procédé selon la revendication 7, dans lequel la manipulation de la carte de bruit résiduel est appliquée à une ou plusieurs zones d'intérêt, dans lequel la zone d'intérêt inclut un ou plusieurs d'un visage, d'un objet au premier plan, d'un arrière-plan; dans lequel de préférence les zones d'intérêt sont indiquées par un utilisateur ou détectées.

9. Procédé selon l'une quelconque des revendications 1 à 8, dans lequel les multiples trames sont des images au moins partiellement chevauchantes d'une scène à des instants différents.

10. Procédé selon l'une quelconque des revendications 1 à 8, dans lequel la combinaison des multiples trames en une image combinée est mise en œuvre dans un matériel et/ou dans lequel la détermination de la carte de bruit résiduel pour l'image combinée à partir des informations de bruit de chaque trame est mise en œuvre sous forme de logiciel.

11. Appareil incluant une mémoire (54, 64) et un processeur (52, 62), dans lequel la mémoire stocke des instructions qui, lorsqu'elles sont exécutées par le processeur, réalisent les étapes du procédé selon l'une quelconque des revendications 1 à 10.

12. Dispositif terminal incluant un capteur d'image pour acquérir de multiples trames et un appareil selon la revendication 11.

13. Dispositif de stockage de logiciel stockant des instructions qui, lorsqu'elles sont exécutées par un processeur (52, 62), réalisent les étapes du procédé selon l'une quelconque des revendications 1 à 10.
